(19) Europäisches Patentamt
European Patent Office
Office européen des brevets

(11) Veröffentlichungsnummer: **0 171 757 B1**

(12) # EUROPÄISCHE PATENTSCHRIFT

(45) Veröffentlichungstag der Patentschrift: **27.06.90**

(51) Int. Cl.$^5$: **C 03 C 25/02**

(21) Anmeldenummer: **85109964.8**

(22) Anmeldetag: **08.08.85**

(54) **Verfahren zur Herstellung eines zugfesten Lichtwellenleiters.**

(30) Priorität: **16.08.84 DE 3430008**

(43) Veröffentlichungstag der Anmeldung:
**19.02.86 Patentblatt 86/08**

(45) Bekanntmachung des Hinweises auf die Patenterteilung:
**27.06.90 Patentblatt 90/26**

(84) Benannte Vertragsstaaten:
**AT BE CH DE FR GB IT LI NL SE**

(56) Entgegenhaltungen:
**EP-A-0 061 118**
**GB-A-2 018 459**

**CHEMICAL ABSTRACTS, Band 100, Nr. 22, Mai 1984, Seite 266, Nr. 179182u, Columbus, Ohio, US; & JP - A - 58 205 104 (HITACHI CHEMICAL CO.) 30.11.1983**

**CHEMICAL ABSTRACTS, Band 92, Nr. 20, 19. Mai 1980, Seite 82, Nr. 165419f, Columbus, Ohio, US; & JP - A - 79 43 525 (GENERAL MILLS CHEMICALS INC.) 20.12.1979**

(73) Patentinhaber: **Henkel Kommanditgesellschaft auf Aktien**
**Postfach 1100 Henkelstrasse 67**
**D-4000 Düsseldorf-Holthausen (DE)**

(72) Erfinder: **Gruber, Werner, Dr.**
**Franz-Kremer-Strasse 7**
**D-4052 Korschenbroich 1 (DE)**

(56) Entgegenhaltungen:
**SME Technical paper FC83-257: A. HUSSAIN, Optimization of UV-Curing for Optical Fibers (1983)**

**KIRK-OTHMER, Encyclopedia of Chemical Technology 3. Ed., Vol. 7, pp. 768-781, J. Wiley & Sons, New York**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 171 757 B1

**Beschreibung**

Die Erfindung betrifft ein Verfahren zur Herstellung eines zugfesten Lichtwellenleiters mit einer auf der Lichtleitfaser befindlichen Kunststoffschicht aus Polyamid durch Aufbringen eines thermoplastischen Polyamides aus der Schmelze auf die Lichtleitfaser unmittelbar nach dem Faserziehprozeß.

Lichtwellenleiter bestehen im wesentlichen aus Glasfasern, die ein solches Brechzahl-Profil aufweisen, daß eingestrahltes Licht allen Krümmungen folgend in ihnen geführt wird. Sie können deshalb als Übertragungsmedium dienen. Der Einsatz von Glas-Lichtwellenleitern ist mit dem Problem des Erhalts der hohen Zugfestigkeit der Glasfaser und der Vermeidung von Dämpfungsanstiegen behaftet. Um die hohe Zugfestigkeit der Glasfaser zu erhalten, werden die Lichtleitfasern unmittelbar nach dem Ziehprozeß mit einer Schutzschicht aus Kunststoff ummantelt. Die optimale Schichtdicke des Kunststoffilmes richtet sich nach dessen mechanischen Eigenschaften, wie E-Modul und Härte, und beträgt im allgemeinen 10 bis 100 µm.

Zur Vermeidung von Dämpfungsverlusten ist es erforderlich, die Glasfaser mit einem flexiblen Material zu umgeben, daß insbesondere über den geforderten Anwendungsbereich von −40°C bis +80°C keine Phasenübergänge zeigt. So muß die Glasübergangstemperatur <−40°C und die Änderung des Modulus über den genannten Temperaturbereich weniger als 2 Zehnerpotenzen betragen. Auch darf keine Längenänderung im Temperaturbereich von −40 bis +80°C eintreten. Diese Art der Beschichtung wird als Primärbeschichtung bezeichnet. Über diese Primärschicht kann je nach Bedarf eine weitere schützende Schicht aufgebracht werden (Sekundärbeschichtung).

Bei der Beschichtung von Lichtleitfasern nach der Lackiertechnik durchläuft die nackte Faser unmittelbar nach dem Ziehprozeß eine oder meist mehrere Beschichtungsvorrichtungen, an die sich jeweils eine Trockenstrecke anschließt. Hierbei können nichtreaktive Beschichtungsmaterialien, d.h. in organischen Lösungsmitteln lösliche Polymere, wie beispielsweise Celluloseacetat, Polyvinylidenfluorid oder Polyesterimid, verwendet werden.

Nachteilig bei der erwähnten Lackiertechnik ist es, daß meist nur sehr dünne Schichten (ca. 5 µm) in einem Beschichtungsvorgang gleichmäßig aufgetragen werden können. Bei verwendung thermisch vernetzbarer Polysiloxane erreicht man zwar pro Beschichtungszyklus eine Schichtstärke von etwa 30 µm, solche Schutzschicht ist jedoch weich und insbesondere mechanisch wenig widerstandsfähig.

Ergänzend zu den thermisch erhärtenden mittels Lackiertechnik aufgetragenen Schichten werden in neuerer Zeit durch kurzwelliges Licht vernetzbare Beschichtungsmaterialien auf Basis von Acrylsäureester von Epoxid-, Polyurethan- sowie Siliciumprepolymere eingesetzt.

Bei derartigen Systemen können zwar in einem Beschichtungsvorgang Schichtdicken von 20 bis 50 µm erreicht werden, ungeklärt ist allerdings noch das Alterungsverhalten der genannten Materialien und deren Einfluß auf die statische Ermüdung der Lichtleitfasern. Auch die Probleme des Restmonomerengehalts sind noch nicht in befriedigender Weise gelöst.

Schließlich war aus der GB—A—20 18 459 ein optischer Lichtwellenleiter bekannt, für dessen Herstellung zur Beschichtung der leitfähigen Fasern Polyamide verwendet wurden, die auf polymerisiertem Laurolactam basieren. Dabei können weitere, ebenfalls zur Polyamidbildung befähigte Monomere wie beispielsweise Aminocarbonsäuren mit 4 bis 16 Kohlenstoffatomen in der Kette mitverwendet werden.

Außerdem war es aus der europ. Patentschrift 61 118 bekannt, Polyamide mit besonders niedrigen Glasübergangstemperaturen herzustellen, die sich durch eine überlegene Flexibilität bei tiefen Temperaturen auszeichnen. Aus der Encyclopedia of Chemical Technology (3. Ed.) Vol. 7 und Seiten 768—787 sind allgemeine Ausführungen über das breite Spektrum der chemischen wie physikalischen Eigenschaften von auf dimeren Fettsäuren basierenden Polyamiden zu finden. Hier wird allerdings an den Einsatz auf verschiedenen Gebieten wie unter denen als Klebstoffe gedacht. Das Überziehen von optischen Fasermaterialien wird aber nicht nahegelegt.

Aufgabe der vorliegenden Erfindung war es, ein Beschichtungsverfahren, welches die Nachteile der Lackiertechnik nicht aufweist, zu finden und die Herstellung eines zugfesten Lichtwellenleiters in einem Auftrag ermöglicht, wobei neben einem einwandfreien mechanischen Schutz des Leiters auch keine Probleme mit Restmonomeren oder der Abspaltung niedermolekularer aus einer Polykondensation stammende flüchtige Verbindungen zu erwarten sind.

Ferner waren weitere Aufgaben, die erfindungsgemäß gelöst werden sollen, in folgenden Forderungen zu sehen: Das primäre Beschichtungsmaterial soll gegenüber der Glasoberfläche und gegen korrosive Umwelteinflüsse chemisch beständig sein, es soll gut auf der Faseroberfläche haften, es soll die optischen Eigenschaften der Lichtleitfasern nicht beeinflussen. Schließlich sollen die bei hoher Abzugsgeschwindigkeit gleichmäßig aufbringbaren Schichten sofort klebfrei erstarren.

Für die optischen Eigenschaften eines Lichtwellenleiters ist die erste Schicht, das heißt primäre Coating von ausschlaggebender Bedeutung. Hier besteht die Forderung, daß physikalische Phasenumwandlungen im Polymeren in einem Temperaturbereich von etwa −60 bis +50°C nicht erfolgen. Die meisten bisher für diesen Anwendungszweck bekannten Polymeren erfüllen diese Bedingungen nicht bzw. nicht in befriedigender Weise, auch nicht die allgemein üblichen Polyamide, basierend auf Dimerfettsäure oder die aus aliphatischen oder aromatischen Dicarbonsäuren aufgebauten Polyamide. So weiß auch der Fachmann, daß Polyamide auf Basis von Caprolactam, wie sie gemäß GB—A—20 18 459

eingesetzt werden, diese Bedingungen nicht erfüllen.

Die Phasenübergänge können über die Torsionspendelmessungen erfaßt werden (vgl. TECHNICAL PAPER FC 83-257 "Optimization of UV-Curing for Optical Fibers Using a Torsional Pendulum Technique). Die Forderungen praktisch nicht vorhandener Phasenübergänge bestehen für das Primär-Coating, während man für einen eventuell später aufzubringenden Sekundär-Coating nicht darauf angewiesen ist, daß ein breiter Temperaturbereich von Phasenumwandlungen frei ist.

Die erfindungsgemäße Lösung des Problems besteht nun in einem Verfahren zur Herstellung eines zugfesten Lichtwellenleiters, bestehend aus Lichtleitfasern mit einer fest verbundenen flexiblen, thermoplastischen Polyamidschicht, indem man Lichtleitfasern nach dem Faserziehprozeß durch die Schmelze eines Polyamids führt, dadurch gekennzeichnet, daß man solche Polyamide einsetzt, die herstellbar sind aus

a) 20 bis 60 Mol-% dimeren Fettsäuren sowie

b) 1 bis 20 Mol-% monomeren Fettsäuren oder aliphatischen Dicarbonsäuren mit einer Kettenlänge von 12 bis 22 Kohlenstoffatomen bzw. 6 bis 12 Kohlenstoffatomen,

c) 1 bis 50 Mol-% Polyetherdiaminen der allgemeinen Formel

$$H_2N—R_1—O—(RO)_x—R_2—NH_2$$

in der x eine Zahl zwischen 2 und 80 und $R_1$ und $R_2$ gleiche oder verschiedene aliphatische Kohlenwasserstoffreste mit 2 bis 6 Kohlenstoffatomen und R ein gegebenenfalls verzweigter aliphatischer Kohlenwasserstoffrest mit 2 bis 6 Kohlenstoffatomen darstellt,

d) 15 bis 50 Mol-% aliphatischen oder cycloaliphatischen Diaminen mit 2 bis 40 Kohlenstoffatomen und daß

e) die Polyamide eine Glasübergangstemperatur unterhlab −10°C aufweisen.

Die vorstehend skizzierten Polyamide sind leicht durch Polykondensation herstellbar und teilweise im Handel erhältich. Sie sind dann für den erfindungsgemäßen Zweck besonders geeignet, wenn sie eine Glasübergangstemperatur von <−40°C und einen Torsionsmodulus von $10^9$ N/m² bei −40°C und $10^8$ N/m² bei +50°C aufweisen.

Der Erweichungspunkt geeigneter Polyamide soll oberhalb von 100°C liegen. Bei 210°C liegt die Viskosität im allgemeinen im Bereich von 1 000 bis 10 000 mPa · s.

Es muß als überraschend angesehen werden, daß gemäß der vorstehend gegebenen Lehre Überzüge auf Glasfasern aufgebracht werden können, die praktisch in einem weiten Bereich von etwa 100°C Bandbreite keine deutliche Phasenumwandlung bei der Messung nach der Torsionspendelmethode zeigen.

Die Glasübergangstemperatur hat vorzugsweise unterhalb −40°C zu liegen.

Glasübergangstemperatur hat unterhalb −40°C zu liegen. Beschrieben wird die Herstellung geeigneter Polyamide mit einem Gehalt an dimiersierten Fettsäuren und Polyetherdiaminen z.B. in der EP—A—61 118.

Beim erfindungsgemäßen Verfahren durchläuft die Lichtleitfaser zum Aufbringen der Polyamidschicht unmittelbar nach der Ziehzone eine Beschichtungsvorrichtung, die mit der Schmelze des thermoplastischen Polyamides gefüllt ist. Der Auftragstemperaturbereich liegt vorzugsweise bei 170 bis 260°C. Die Abkühlung erfolgt durch eine mehr oder weniger lange Kühlzone.

Anschließend kann bei Bedarf eine weitere Sekundärbeschichtung auf die mit dem erfindungsgemäßen thermoplastischen Polyamid gecoatete Lichtleitfaser in an sich bekannter und nicht unüblicher Weise aufgebracht werden. An die Sekundärbeschichtung werden hinsichtlich Flexibilität nicht die Anforderungen gestellt, wie an die Primärbeschichtung. Als Sekundärbeschichtung können daher die üblichen Polymere wie Polyamide vom Nylon-Typ, Polyethylen, Mischpolymere aus Vinylacetat und Ethylen/Propylen, Polyester, thermoplastische Elastomere und Polyfluorethylen verwendet werden.

Mittels des erfindungsgemäßen Verfahrens können somit durch einmaligen Auftrag in rationeller Fertigung gleichmäßige, dicke Schutzschichten erzeugt werden, die eine hohe Formbeständigkeit, hohe chemische Resistenz und mechanische Festigkeit aufweisen.

Beispiel

Ein thermoplastisches Polyamid wurde aus den Bestandteilen

653,1 g Dimerfettsäure
12,6 g Tallölfettsäure
59,1 g Sebazinsäure
81,9 g Ethylendiamin und
167,1 g Bis-(3-aminopropyl)polytetrahydrofuran (MG 1100)

hergestellt.

Dabei wurde folgende Technik angewendet: Die vorgelegten Carbonsäuren wurden unter Stickstoff zunächst auf etwa 60°C erhitzt und dann die weiteren Reaktionskomponenten zugegeben. Innerhalb 1 Stunde wurde dann auf 230°C aufgeheizt und 1 Stunde bei dieser Temperatur gehalten. Dann wurde

während der nächsten Stunde bei konstanter Temperatur auf 15 mbar evakuiert. Nach Abkühlen auf 210°C wurde das Reaktionsprodukt abgelassen und die Kennzahlen bestimmt:

| | |
|---|---|
| Aminzahl: | 5,2 |
| Säurezahl: | 1,4 |
| Erweichungspunkt: | +168°C |
| Glasübergangstemperatur: | −45°C |
| Torsionsmodulus: | −40°C $10^9$ N/m$^2$ |
| | +50°C $10^8$ N/m$^2$ |

Die Schmelze des Polyamids wurde bei 205 bis 210°C zur Beschichtung einer Lichtleitfaser eingesetzt. Der auf diese Weise erhaltene Lichtwellenleiter wies einen gleichmäßigen Kunststoffüberzug aus Polyamid mit einer Schichtdicke von 60 µm auf. Die optischen Eigenschaften der Lichtleitfaser wurden nicht beeinträchtigt, d.h. eine optische Dämpfung wurde nicht beobachtet.

## Patentansprüche

1. Verfahren zur Herstellung eines zugfesten Lichtwellenleiters, bestehend aus Lichtleitfasern mit einer fest verbundenen flexiblen, thermoplastischen Polyamidschicht, indem man Lichtleitfasern nach dem Faserziehprozeß durch die Schmelze eines Polyamids führt, dadurch gekennzeichnet, daß man solche Polyamide einsetzt, die herstellbar sind aus

a) 20 bis 60 Mol-% dimeren Fettsäuren sowie

b) 1 bis 20 Mol-% monomeren Fettsäuren oder aliphatischen Dicarbonsäuren mit einer Kettenlänge von 12 bis 22 Kohlenstoffatomen bzw. 6 bis 12 Kohlenstoffatomen,

c) 1 bis 50 Mol-% Polyetherdiaminen der allgemeinen Formel

$$H_2N—R_1—O—(RO)_x—R_2—NH_2$$

in der x eine Zahl zwischen 2 und 80 und $R_1$ und $R_2$ gleiche oder verschiedene aliphatische Kohlenwasserstoffreste mit 2 bis 6 Kohlenstoffatomen und R ein gegebenenfalls verzweigter aliphatischer Kohlenwasserstoffrest mit 2 bis 6 Kohlenstoffatomen darstellt,

d) 15 bis 50 Mol-% aliphatischen oder cycloaliphatischen Diaminen mit 2 bis 40 Kohlenstoffatomen und daß

e) die Polyamide eine Glasübergangstemperatur unterhalb −10°C aufweisen.

2. Verfahren nach Anspruch 1, dadurch gekennzeichnet, daß man solche Polyamide, die auf dimerisierten Fettsäuren und Polyetherdiamin basieren, bei Temperaturen zwischen 170 und 260°C einsetzt.

3. Verfahren nach Ansprüchen 1 bis 2, dadurch gekennzeichnet, daß die Polyamide eine Glasübergangstemperatur von kleiner als −40°C und einen Torsionsmodulus von $10^9$ N/m$^2$ bei −40°C und $10^8$ N/m$^2$ bei +50°C aufweisen.

## Revendications

1. Procédé pour la fabrication d'une fibre optique résistant à la traction, constitué de fibres optiques comportant une couche de polyamide thermoplastique flexible solidement liée, dans lequel, après le processus d'étirage des fibres, on fait passer les fibres optiques à travers la masse fondue d'un polyamide, caractérisé en ce que l'on utilise des polyamides qui sont préparables à partir de

a) 20 à 60% en mole d'acides gras dimères, ainsi que

b) 1 à 20% en mole d'acides gras monomères ou d'acides dicarboxyliques aliphatiques ayant une longueur de chaîne de 12 à 22 atomes de carbone ou, respectivement, de 6 à 12 atomes de carbone,

c) 1 à 50% en mole de polyétherdiamines de formule générale

$$H_2N—R_1—O—(RO)_x—R_2—NH_2$$

dans laquelle x représente un nombre compris entre 2 et 80 et $R_1$ et $R_2$ représentent des radicaux hydrocarbonés aliphatiques identiques ou différentes ayant de 2 à 6 atomes de carbone, et R représente un radical hydrocarboné aliphatique éventuellement ramifié ayant de 2 à 6 atomes de carbone,

d) 15 à 50% en mole de diamines aliphatiques ou cycloaliphatiques ayant de 2 à 40 atomes de carbone, et en ce que:

e) les polyamides présentent une température de transition vitreuse inférieure à −10°C.

2. Procédé selon la revendication 1, caractérisé en ce que l'on utilise à des températures comprises entre 170 et 260°C des polyamides à base d'acides gras dimères et de polyétherdiamine.

3. Procédé selon la revendication 1 ou 2, caractérisé en ce que les polyamides présentent une température vitreuse inférieure à −40°C et un module de torsion de $10^9$ N/m$^2$ à −40°C et de $10^8$ N/m$^2$ à +50°C.

**Claims**

1. A method of making a high-tensile optical waveguide consisting of optical fibers with a firmly adhering, flexible thermoplastic polyamide coating, in which optical fibers are passed through a melt of a polyamide after the fiber-drawing process, characterized in that the polyamides used are those which can be produced

a) from 20 to 60 mol-% of dimerized fatty acids and

b) from 1 to 20 mol-% of monomeric fatty acids or aliphatic dicarboxylic acids having a chain length of from 12 to 22 carbon atoms or from 6 to 12 carbon atoms,

c) from 1 to 50 mol-% of polyether diamines corresponding to the following general formula

$$H_2N—R_1—O—(RO)_x—R_2—NH_2$$

in which x is a number of from 2 to 80, $R_1$ and $R_2$ are the same or different and represent $C_2$—$C_6$ aliphatic hydrocarbon radicals and R is an optionally branched aliphatic $C_2$—$C_6$ hydrocarbon radical,

d) from 15 to 50 mol-% of aliphatic or cycloaliphatic $C_2$—$C_{40}$ diamines, and in that

e) the polyamides have a glass transition temperature below −10°C.

2. A method as claimed in claim 1, characterized in that polyamides based on dimerized fatty acids and polyether diamine are used at temperatures from 170 to 260°C.

3. A method as claimed in claims 1 and 2, characterized in that the thermoplastic polyamides used have a glass transition temperature of $<-40$°C and a torsion modulus of $10^9$ N/$m^2$ at −40°C and of $10^8$ N/$m^2$ at +50°C.